(19) Europäisches Patentamt
European Patent Office
Office européen des brevets

(11) Veröffentlichungsnummer: **0 309 865 B1**

# (12) EUROPÄISCHE PATENTSCHRIFT

(45) Veröffentlichungstag der Patentschrift: **05.08.92**

(51) Int. Cl.$^5$: **C08G 18/32**, C08G 18/38, C08G 18/65

(21) Anmeldenummer: **88115374.6**

(22) Anmeldetag: **20.09.88**

## (54) Verfahren zur Herstellung von wärmestandfesten Polyurethanharnstoff-Elastomeren.

(30) Priorität: **29.09.87 DE 3732728**

(43) Veröffentlichungstag der Anmeldung:
**05.04.89 Patentblatt 89/14**

(45) Bekanntmachung des Hinweises auf die Patenterteilung:
**05.08.92 Patentblatt 92/32**

(84) Benannte Vertragsstaaten:
**AT BE CH DE ES FR GB IT LI NL SE**

(56) Entgegenhaltungen:
**FR-A- 1 230 276**

**CHEMICAL ABSTRACTS, Band 94, Nr. 4, Februar 1981, Seite 37, Zusammenfassung Nr. 48271g, Columbus, Ohio, US; & SU-A-686 390 (ALL-UNION SCIENTIFIC-RESEARCH INSTITUTE OF SYNTHETIC RESINS) 15-10-1980**

(73) Patentinhaber: **BAYER AG**

**W-5090 Leverkusen 1 Bayerwerk(DE)**

(72) Erfinder: **Grögler, Gerhard, Dr.**
**von-Diergardt-Strasse 48**
**W-5090 Leverkusen 1(DE)**
Erfinder: **Ruckes, Andreas, Dr.**
**Herderstrasse 13**
**W-5090 Leverkusen 3(DE)**
Erfinder: **Hess, Heinrich, Dr.**
**Körnerstrasse 5**
**W-5090 Leverkusen 1(DE)**

**EP 0 309 865 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein technisch vereinfachtes Verfahren zur Herstellung von Polyurethanharnstoff-Elastomeren, bei der hochschmelzende, in fester Phase vorliegende aromatische Diamine mit Polyisocyanaten bzw. Isocyanat-Prepolymeren in heterogener Reaktion umgesetzt werden.

Die Herstellung von Polyurethanharnstoff-Elastomeren aus Polyisocyanaten, höhermolekularen Polyhydroxylverbindungen und aromatischen Diaminen ist bekannt. Um angemessene Verarbeitungszeiten für Reaktivsysteme aus den genannten Ausgangskomponenten zu gewährleisten, setzt man die technisch meistverwendeten reaktionsfähigen aromatischen Isocyanate zweckmäßigerweise mit träge reagierenden Diaminen um. Als Diamine haben sich in diesem Zusammenhang in der Praxis vor allem solche aromatischen Diamine bewährt, deren Basizität und damit auch Reaktivität gegenüber Isocyanaten durch Einführung von Halogen- oder Carboxy-Substituenten herabgesetzt ist. Als Beispiel sei das bisher am meisten verwendete 3,3,′-Dichlor-4,4′-diaminodiphenylmethan (MOCA) genannt.

In der US-Patentschrift 3 891 606 wird die Vernetzung von NCO-Präpolymeren aus Polyhydroxylverbindungen und einem Überschuß an Polyisocyanaten mit aromatischen Diaminen beschrieben, deren Reaktivität gegenüber Isocyanatgruppen durch Komplexbildung mit gewissen Alkalimetallsalzen herabgesetzt ist. Der Nachteil dieses Verfahrens liegt darin, daß es auf zwei spezielle aromatische Diamine beschränkt ist. Darüberhinaus muß der Komplex zwischen dem aromatischen Diamin und dem Alkalimetallsalz in einem gesonderten Verfahrensschritt hergestellt werden.

Ein weitere Möglichkeit der Steuerung der Reaktionsgeschwindigkeit zwischen Polyisocyanaten und aromatischen Diaminen besteht darin, die Reaktion in einem organischen Lösungsmittel auszuführen. Verfahren dieser Art werden beispielsweise in US-Patent 3 926 922 und in der japanischen Offenlegungsschrift 9195/70 beschrieben. Der Nachteil einer Mitverwendung von organischen Lösungsmitteln liegt auf der Hand: Einerseits wird die Feuer-und Explosionsgefahr erhöht und andererseits ist aus ökonomischen und ökologischen Gründen eine technisch aufwendige Rückgewinnung des Lösungsmittels erforderlich.

Über die Herstellung von Polyurethanharnstoffen durch Umsetzung von Polyisocyanaten mit aromatischen Diaminen in heterogener Phase ist bisher nur wenig bekannt. Die technisch im allgemeinen besonders interessanten aromatischen Diamine mit höherem Schmelzpunkt werden gemäß Stand der Technik entweder in gelöster From angewandt, was mit den eben beschriebenen Nachteilen verbunden ist, oder aber in der Schmelze mit Polyisocyanaten umgesetzt. Die Verarbeitung von aromatischen Diaminen in der Schmelze wird beispielsweise in der schon oben erwähnten US-Patentschrift 3 926 922 oder in der Deutschen Auslegeschrift 1 122 699 beschrieben. Gegenstand der DE-AS 1 122 699 ist ein Verfahren zur Herstellung von Polyurethanelastomeren durch Vernetzung von flüssigen Isocyanat-Präpolymeren durch Umsetzung mit Gemischen aus primären Diaminen und mehrere Hydroxylgruppen aufweisenden Verbindungen unter Formgebung, in welchem eine Dispersion eines pulverförmigen kristallinen Diamins in einem flüssigen, mehrere Hydroxylgruppen aufweisenden Polyester, Polyether oder im Rizinusöl in das Präpolymere bei einer unter dem Schmelzpunkt des Diamins liegenden Temperatur eingebracht und die Masse bei Temperaturen oberhalb des Schmelzpunktes des Diamins in der Mischung in an sich bekannter Weise ausgehärtet wird. Die eigentliche "Aminvernetzung" findet also auch bei diesem Verfahren in flüssiger, homogener Phase statt. Nachteilig sind bei dem Verfahren der DE-AS 1 122 699 insbesondere die bei der Verarbeitung hochschmelzender Diamine, wie z. B. 1,5-Naphthylendiamin (m.p. = 189 °C) oder 4,4′-Diaminodiphenylether (m.p. = 186 °C), erforderlichen hohen Temperaturen, da hierbei erfahrungsgemäß bereits in merklichem Umfang Zersetzungsreaktionen im Polyurethan auftreten, die die mechanischen Eigenschaften der Verfahrensprodukte in unkontrollierbarer Weise verändern.

In der US-PS 3 105 062 wird ein Verfahren zur Herstellung von Polyurethanharnstoffen beschrieben, bei dem Isocyanatgruppen enthaltende höhermolekulare Voraddukte mit vorzugsweise aromatischen Diaminen in heterogener Phase umgesetzt werden. Die Verfestigung dieser Reaktionsmischungen erfolgt bei einer Temperatur, bei der das "Zwei-Phasensystem" in ein "Ein-Phasensystem" übergeht. Diese Temperatur liegt in der Regel bei 100 bis 170 °C.

Die in US-PS 3 105 062 zitierten aromatischen Diamine zeigen jedoch in den Reaktionsmedium (NCO-Voraddukt) noch eine - wenn auch geringe - Löslichkeit, so daß bei dem Mischvorgang der beiden Komponenten auch bei Raumtemperatur bereits unkontrollierbare Vorreaktionen ablaufen. Die Folge ist, daß die Reaktionsansätze in sehr kurzer Zeit aufdicken und man zum Teil pastenartige Formulierungen erhält. Diese sind im üblichen Gießverfahren nur noch schwer zu verarbeiten und müssen daher unter Druckanwendung in die gewünschte Form gebracht werden, bevor die eigentliche Verfestigung durch Hitzeeinwirkung erfolgt. Die Lagerstabilität der aufgedickten Reaktionsmischungen (Topfzeit) ist gemäß US-PS 3 105 062 ausreichend für die weitere Verarbeitung (Formgebung unter Druck, Beschichtung). Sie beträgt mehrere Stunden. Aus den angeführten Beispielen ist zu entnehmen, daß es sich vorzugsweise um

Reaktionsmischungen handelt, die eine maximale Topfzeit von etwa einer Stunde besitzen. Sie können daher nicht als Langzeit-Systeme betrachtet werden.

In der US-PS 3 105 062 wird ausdrücklich darauf hingewiesen, daß die Verwendung der dort genannten - nur in fester Form vorliegenden Diamine - im Einstufen-Prozeß nur zu unbefriedigenden Polyurethan-Formkörpern führt. In diesem Falle erfolgt in verstärktem Maße die unerwünschte Vorreaktion des Diamins mit dem Diisocyanat, wobei der schwer lösliche Polyharnstoff im Reaktionsgemisch ausfällt und nicht mehr weiter reagiert.

In der DE-OS 26 35 400 wird ein weiteres Verfahren zur Herstellung von Polyurethanharnstoff-Elastomeren beschrieben, bei dem in ein- oder mehrstufigem Verfahren aromatische Diamine als Kettenverlängerer zur Reaktion gelangen. Dieses Verfahren ist dadurch gekennzeichnet, daß die aromatischen Diamine in fester Form in den Reaktionsmischungen vorliegen und einen Schmelzpunkt oberhalb von 130 °C aufweisen. Die Hitzeverfestigung dieser Ansätze erfolgt in einem Temperaturbereich von 80 bis 120 °C und damit unterhalb des Schmelzpunktes des aromatischen Diamins. Bedingt durch die Auswahl der entsprechenden Diamine als Kettenverlängerer erfolgt mit dem NCO-haltigen Voraddukt (NCO-Präpolymer) keine vorläufige Vorreaktion, die zu einer Aufdickung der Ansätze führt. Solche Systeme können demgemäß auch im Gießverfahren gut verarbeitet werden. Da die Topfzeit dieser Reaktivsysteme erheblich erhöht ist, können nach diesem Verfahren viele aromatische Diamine eingesetzt werden, die nach der bisher bekannten Arbeitstechnik nur sehr schlecht zu verarbeiten waren.

Aus den in DE-OS 26 35 400 angegebenen Beispielen ist zu entnehmen, daß die Topfzeit der flüssigen Reaktionsmischungen je nach Reaktivität bzw. Löslichkeit des aromatischen Diamins in einem Temperaturbereich von wenigen Minuten bis mehrere Stunden liegt. Für übliche Verarbeitungsbedingungen, z. B. im Handgießverfahren sind diese Reaktionsansätze insbesondere die mit längerer Topfzeit meist ohne große Schwierigkeit zu verarbeiten. Problematisch wird es dagegen, wenn infolge Maschinenausfällen oder anderen Zwangspausen eine längerer Unterbrechung zwischen Herstellung und Reaktionsansätze und Verfestigungsphase vorliegt. Die Forderung nach langer Verarbeitungszeit bei niederer Temperatur und kurzer Verfestigungszeit bei erhöhter Temperatur, wird daher in der Praxis immer dringender.

Die fertigen PUR-Kunststoffe sollen im allgemeinen gute mechanische Eigenschaften und vielfach auch eine dem Verwendungszweck angepaßte Wärmestabilität besitzen. Nach dem Stand der Technik ist diese Wärmestabilität von PUR-Elastomeren stark von der Art der Kettenverlängerer abhängig. Werden zur Herstellung von Elastomeren z. B. glykolische Kettenverlängerer verwendet, so resultieren PUR-Körper mit geringerer Wärmestabilität als bei Verwendung von Aminogruppen enthaltenden Verbindungen. Selbstverständlich sind innerhalb der jeweiligen Art von Kettenverlängerern (HO- oder $NH_2$-gruppenhaltige Verbindungen) auch noch deutliche Unterschiede bezüglich des Wärmestandes zu erkennen.

In der DE-OS 26 35 400 wurden zur Herstellung von Polyurethanharnstoff-Elastomeren zahlreiche Diamine mit verschiedener Konstitution als geeignete Kettenverlängerer angegeben. Als einziger Vertreter eines Diaminodiphenylharnstoffes wird 2,2′-Diaminodiphenylharnstoff erwähnt.

Ein Versuchsbeispiel fehlt.

Die Überprüfung der Anmeldung ergab, daß die Umsetzung eines NCO-Voradduktes mit dem obengenannten Diaminodiphenylharnstoff einen elastischen PUR-Formkörper mit durchaus akzeptablem mechanischen Wertniveau liefert. Der Wärmestand dieser Elastomeren ist jedoch unerwartet schlecht. Bereits bei der Nachtemperung des Formkörpers bei 120-130 °C tritt nach kurzer Zeit ein beachtlicher Abfall der mechanischen Werte ein. Bei 140-150 °C liegt nur noch eine zähe Schmelze vor, unabhängig davon, ob die Probe in heißem oder in kaltem Zustand vorliegt (Beispiel).

Das Ziel der vorliegenden Erfindung war daher, ein Verfahren zur Herstellung von Polyurethanharnstoffen zu finden, bei dem die Verarbeitungszeit der Reaktionsansätze bei der jeweiligen Verarbeitungstemperatur in einem Bereich von mindestens mehreren Stunden, vorzugsweise von mindestens 8 Stunden (Langzeit-System), liegt. Wünschenswert ist weiterhin, daß sich die flüssigen Reaktionsansätze bei möglichst niederen Reaktionstemperaturen in wirtschaftlich interessanter Reaktionszeit verfestigen lassen.

Der vorliegenden Erfindung liegt auch der Gedanke zugrunde, geeignete Aminogruppen enthaltende Kettenverlängerer zu finden, die in der Ausgangskomponente, z.B. NCO-Voraddukt, bei niedriger Temperatur eine nur minimale, aber bei höherer Temperatur eine sehr gute Löslichkeit besitzen, so daß während der Verfestigungsphase der Ansätze ein möglichst hochmolekularer Aufbau des Polyurethan-Harnstoffes gewährleistet wird.

Das Ziel der vorliegenden Erfindung war daher, ein Verfahren zur Herstellung von Polyurethanharnstoff-Elastomeren zu finden, bei dem hochwertige Elastomere mit möglichst hohem Wärmestand erhalten werden.

Es wurde nun überraschenderweise gefunden, daß in fein verteilter Form vorliegende Diaminodiphenylharnstoffe der allgemeinen Formel

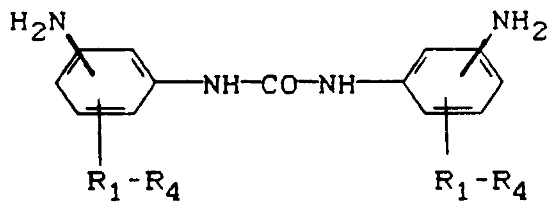

bei denen sich die $NH_2$-Gruppen in m- und/oder p-Stellung zur Harnstoffgruppe befinden und $R^1$, $R^2$, $R^3$ und $R^4$ (gleich oder verschieden) = H oder $C_1$-$C_6$-Resten entsprechen,

in Kombination mit z.B. Polyisocyanaten oder NCO-Voraddukten bei Raumtemperatur Langzeit-lagerstabile Reaktionsmischungen ergeben. Die Lagerstabilität solcher Reaktivsysteme liegt in einem Zeitraum von mindestens mehreren Stunden, bevorzugt von mindestens 8 Stunden bis mehrere Tage oder Monate bei Raumtemperatur oder bei leicht erhöhter Temperatur (20 bis 50 ° C).

Die Verfestigung dieser Systeme erfolgt dann zu einem beliebigen Zeitpunkt durch Einwirkung von Hitze (120 bis 180 ° C). Man erhält Polyurethan-Elastomere mit sehr guten mechanischen Eigenschaften und hohem Wärmestand.

Werden die erfindungsgemäßen Kettenverlängerer dagegen in gelöster Form den Polyisocyanaten bzw. NCO-Voraddukten zugesetzt, so verhalten sie sich wie übliche aromatische Diamine. Nach wenigen Sekunden erfolgt Vernetzung des Reaktionsansatzes und das verquallte Folgeprodukt ist nicht mehr weiter zu verarbeiten.

Für die lange Standzeit der erfindungsgemäßen Reaktionsmischungen ist daher die Reaktivität der in heterogener Phase vorliegenden Diaminodiphenylharnstoffe gegenüber den NCO-Gruppen der Polyisocyanate bzw. NCO-Gruppen der höhermolekularen Voraddukte nur von geringer Bedeutung. Im wesentlichen hängt die Vernetzungsgeschwindigkeit vielmehr von der Tendenz der Diamine ab, sich in der Reaktionsmischung aufzulösen. Demzufolge ist die Lagerstabilität der Reaktionsansätze auch stark abhängig von der Art der Ausgangsprodukte z.B. der dem NCO-Voraddukt zugrunde liegenden Polyols. Durch Verwendung geeigneter Polyole kann auch die Vernetzungszeit bzw. die Vernetzungstemperatur der Ansätze im gewünschen Sinne beeinflußt werden.

Werden z. B. zur Herstellung der NCO-Voraddukte die handelsüblichen Polypropylenglykolether (aus Propylenoxid + $H_2O$) verwendet, so erhält man in Abmischung mit geeigneten Diaminodiphenylharnstoffen bei Raumtemperatur lagerstabile Einkomponentensysteme. Die Verfestigung solcher Ansätze erfolgt bei den vorgegebenen Temperaturen aber erst nach sehr langer Hitzeeinwirkung. Während dieser Zeit können unkontrollierbare Nebenreaktionen des NCO-Voradduktes ablaufen (z. B. Trimerisierung, Alliphonatisierung), so daß unbefriedigende Elastomere erhalten werden.

Diese lange Verfestigungszeit kann jedoch beträchtlich erniedrigt werden, wenn als Ausgangskomponenten z. B. Polypropylenglykolether verwendet werden, die zusätzlich Ethylenoxid-Einheiten enthalten. Der Charakter des Einkomponentensystems wird dadurch nicht verändert.

Auf der anderen Seite ist der Einsatz von reinem Polypropylenglykolether dann angebracht, wenn die $NH_2$-gruppenenthaltende Gegenkomponente eine geringfügig bessere Löslichkeit besitzen, als in obigen Fällen beschrieben.

Dies gilt auch bei Verwendung von Polyestern (z. B. Polyadipat) zur Herstellung des NCO-Voradduktes. Hierbei kann durch Auswahl der niedermolekularen Glykole (Veresterungskomponenten) ein wesentlicher Einfluß auf die Verarbeitungscharakteristik der Ansätze erzielt werden.

Keinesfalls darf jedoch beim Abmischen beider Reaktionskomponenten (NCO-Voraddukt und aromatisches Diamin) bei Raumtemperatur oder leicht erhöhter Temperatur eine Vorverdickung infolge vorzeitiger Polyaddition der Reaktionsansätze erfolgen.

Die erfindungsgemäß geeigneten Diaminodiphenylharnstoffe werden nach an sich bekannten Methoden hergestellt. So können z. B. Nitroaniline mit Phosgen oder Diphenylcarbonat in die entsprechenden Dinitrodiphenylharnstoffe überführt und anschließend durch Reduktion in die gewünschten Diaminodiphenylharnstoffe überführt werden. Eine andere allgemein anwendbare Methode ist die Reaktion von Aminoacetaniliden mit Phosgen oder Diphenylcarbonat mit anschließender alkalischer Verseifung der Acetamid-Gruppe zum gewünschten Produkt.

Eine besonders einfache und deshalb zur Herstellung der erfindungsgemäßen Harnstoffe bevorzugte Methode ist die Umsetzung von aromatischen p- bzw. m-Diaminen mit Harnstoff, wie sie in der US-PS 16 17 847 (in einem inerten Lösungsmittel oder in der Schmelze) oder der US-PS 25 03 797 (in schwefelsaurer oder neutraler wäßriger Lösung) beschrieben ist.

Bedingt durch die Herstellungsmethode werden jedoch in der Regel neben den monomeren Diaminodiphenylharnstoffen I auch höhermolekulare, mehrkernige Produkte der allgemeinen Formel II

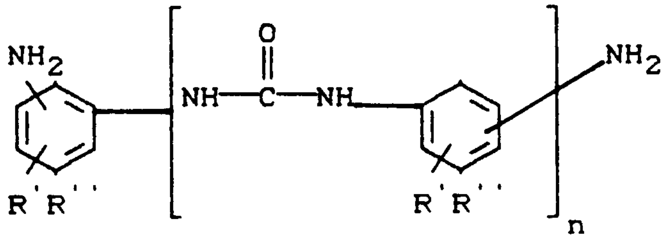

n > 2

gebildet, die jedoch innerhalb gewisser Grenzen keinen negativen Einfluß auf die Eigenschaften der Elastomeren haben. Der Anteil der Harnstoffe mit n = 1-3 muß jedoch mindestens 60 Gew.-%, bezogen auf die Gesamtmenge betragen. Bevorzugt werden jedoch Harnstoffe mit möglichst hohem Anteil an "Monomeren" (n = 1).

Die fest anfallenden Diaminodiphenylharnstoffe werden im allgemeinen zunächst fein gemahlen, was z. B. in einer Kugelmühle geschehen kann, bis sie eine durchschnittliche Korngröße von 1 bis 50 µm, vorzugsweise 3 bis 10 µm aufweisen.

Beispiele für bevorzugte Diamine zur Herstellung der erfindungsgemäßen Harnstoffe sind z. B. p-Phenylendiamin, m-Phenylendiamin, 2,5-Diaminotoluol, 2,4-Diaminotoluol, 2,6-Diaminotoluol, 1-Methyl-3,5-diethyl-2,6-diaminobenzol und 1,3,5-Triethyl-2,4-diaminobenzol. Die erhaltenen Diamino-Pulver können direkt mit dem NCO-Voraddukt vermischt werden oder sie können bevorzugt als Suspension mit wenig dem NCO-Voraddukt zugrunde liegenden hochmolekularen Polyol appliziert werden.

Selbstverständlich können auch Mischungen an den oben genannten Diaminodiphenylharnstoffen und anderen in der PUR-Chemie bekannten Kettenverlängerern mit mindestens zwei gegenüber Isocyanaten reaktionsfähigen Wasserstoffatomen mit einem Mol-Gewicht von 60 bis 400 eingesetzt werden.

Für das erfindungsgemäße Verfahren zur Herstellung von wärmestabilen Polyurethanharnstoffen können die oben genannten festen Diaminodiphenylharnstoffe gemäß DE-OS 3 429 149 auch in retardierter Form eingesetzt werden. So können die Diaminodiphenylharnstoffe vor der Verwendung als Kettenverlängerer z. B. in einem inerten Lösungsmittel oder bevorzugt in Suspension in einem hochmolekularen Polyol mit geringen Mengen eines geeigneten Polyisocyanates behandelt werden. Hierbei bildet sich auf der Teilchenoberfläche des Diamins eine dünne Polyharnstoff-Hülle, die als Diffusions-Sperrschicht dient. Bei einer bestimmten Temperatur wird diese Diffusions-Sperrschicht zerstört und die Verfestigung des Ansatzes wird eingeleitet.

Mit diesen so modifizierten (retardierten) Diaminodiphenylharnstoffen (entweder als Pulver oder als Suspension in Polyol) erhält man in Kombination mit NCO-Voraddukten Reaktivsysteme, die eine deutlich längere Lagerstabilität aufweisen als solche Systeme, bei denen der Kettenverlängerer nicht mit einer Diffusions-Sperrschicht versehen wurde (s. Beispiel).

Als Ausgangskomponenten für das erfindungsgemäße Verfahren sind einerseits Polyisocyanate mit den höhermolekularen bzw. niedermolekularen NCO-reaktiven Verbindungen (OH- bzw. $NH_2$-gruppenhaltige Verbindungen) und andererseits die daraus hergestellten Voraddukte (NCO-Voraddukte) geeignet.

Die für das erfindungsgemäße Verfahren zur Herstellung der NCO-Gruppen aufweisenden Voraddukte geeigneten Polyhydroxylverbindungen haben ein Molekulargewicht von etwa 400 bis 10.000, vorzugsweise 600 bis 6.000. Es handelt sich dabei um mindestens zwei, vorzugsweise 2 bis 4, Hydroxylgruppen aufweisende Polyester, Polyether, Polythioether, Polyacetale, Polycarbonate und Polyesteramide, wie sie für die Herstellung von homogenen und von zellförmigen Polyurethanen an sich bekannt sind.

Die in Frage kommenden Hydroxylgruppen aufweisenden Polyester sind z. B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein. Als Beispiele hierfür seien genannt: Bernsteinsäure Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere und trimere Fettsäuren wie Ölsäure, gegebenenfalls in Mischung mit monomeren Fettsäuren, Terephthalsäuredimethylester und Terephthalsäure-bis-glykolester. Als mehrwertige Alkohole kommen z. B. Ethylenglykol, Propylenglykol-(1,2) und -(1,3), Butylenglykol-(1,4) und -(2,3), Hexandiol-(1,6), Octandiol-(1,8), Neopentylglykol, Cyclohexandimethanol (1,4-Bis-hydroxymethylcyclohexan), 2-Methyl-1,3-propandiol, Glycerin, Trimethylolpropan, Hexantriol-(1,2,6), Butantriol-(1,2,4), Trimethylolethan, Pentaerythrit, Chinit, Mannit und Sorbit, Methylglykosid, ferner Diethylenglykol, Triethylenglykol, Tetraethylenglykol, Polyethylenglykol, Dipropylenglykol, Polypropylenglykole, Dibutylenglykol und Polybutylenglykole in Frage. Die Polyester können anteilig endständige Carboxylgruppen aufweisen. Auch Polyester aus Lactonen, z. B. ϵ-Caprolacton oder Hydroxycarbonsäuren, z. B. ω-Hydroxycapronsäure, sind einsetzbar.

Auch die erfindungsgemäß in Frage kommenden, mindestens zwei, in der Regel zwei bis acht, vorzugsweise zwei bis drei, Hydroxylgruppen aufweisenden Polyether sind solche der an sich bekannten Art und werden z. B. durch Polymerisation von Epoxiden wie Ethylenoxid, Propylenoxid, Butylenoxid, Tetrahydrofuran, Styroloxid oder Epichlorhydrin mit sich selbst, z. B. in Gegenwart von $BF_3$, oder durch Anlagerung dieser Epoxide, gegebenenfalls im Gemisch oder nacheinander, an Startkomponenten mit reaktionsfähigen Wasserstoffatomen wie Wasser, Alkohole oder Amine, z. B. Ethylenglykol, Propylenglykol-(1,3) oder -(1,2), Trimethylolpropan, 4,4′-Dihydroxydiphenylpropan, Anilin, Ammoniak, Ethanolamin oder Ethylendiamin hergestellt. Auch Sucrosepolyether, wie sie z. B. in den deutschen Auslegeschriften 1 176 358 und 1 064 938 beschrieben werden, kommen erfindungsgemäß in Frage, Vielfach sind solche Polyether bevorzugt, die überwiegend (bis zu 90 Gew.-%, bezogen auf alle vorhandenen OH-Gruppen in Polyether) primäre OH-Gruppen aufweisen. Auch durch Vinylpolymerisate modifizierte Polyether, wie sie z. B. durch Polymerisation von Styrol und Acrylnitril in Gegenwart von Polyethern entstehen (amerikanische Patentschriften 3.383.351, 3.304.273, 3.523.093, 3.110.695, deutsche Patentschrift 1.152.536), sind geeignet, ebenso OH-Gruppen aufweisende Polybutadiene.

Unter den Polythioethern seien insbesondere die Kondensationsprodukte von Thiodiglykol mit sich selbst und/oder mit anderen Glykolen, Dicarbonsäuren, Formaldehyd, Aminocarbonsäuren oder Aminoslkoholen angeführt. Je nach den Co-Komponenten handelt es sich bei den Produkten um Polythiomischether, Polythioetherester oder Polythioetheresteramide.

Als Polyacetale kommen z. B. die aus Glykolen, wie Diethylenglykol, Triethylenglykol, 4,4′-Dioxethoxydiphenyldimethylmethan, Hexandiol und Formaldehyd herstellbaren Verbindungen in Frage. Auch durch Polymerisation cyclischer Acetale lassen sich erfindungsgemäß geeignete Polyacetale herstellen.

Als Hydroxylgruppen aufweisende Polycarbonate kommen solche der an sich bekannten Art in Betracht, die z. B. durch Umsetzung von Diolen wie Propandiol-(1,3), Butandiol-(1,4) und/oder Hexandiol-(1,6), Diethylenglykol, Triethylenglykol oder Tetraethylenglykol mit Diarylcarbonaten, z. B. Diphenylcarbonat, oder mit Phosgen hergestellt werden können.

Zu den Polyesteramiden und Polyamiden zählen z. B. die aus mehrwertigen gesättigten und ungesättigten Carbonsäuren bzw. deren Anhydriden und mehrwertigen gesättigten und ungesättigten Aminoalkoholen, Diaminen, Polyaminen und ihren Mischungen gewonnenen, vorwiegend linearen Kondensaten.

Auch bereits Urethan- oder Harnstoffgruppen enthaltende Polyhydroxylverbindungen sowie gegebenenfalls modifizierte natürliche Polyole, wie Rizinusöl, Kohlenhydrate oder Stärke, sind verwendbar. Auch Anlagerungsprodukte von Alkylenoxiden an Phenol-Formaldehyd-Harzen bzw. an Harnstoff-Formaldehydharzen können im erfindungsgemäßen Verfahren eingesetzt werden.

Vertreter dieser erfindungsgemäß zu verwendenden Verbindungen sind z. B. in High Polymers, Vol. XVI, "Polyurethanes, Chemistry and Technology", verfaßt von Saunders-Frisch, Interscience Publishers, New York, London, Band I, 1962, Seiten 32 - 42 und Seiten 44 - 54 und Band II, 1964, Seiten 5 - 6 und 198 - 199, sowie im Kunststoff-Handbuch, Band VII, Vieweg-Höchtlen, Carl-Hanser-Verlag, München, 1966, z. B. auf den Seiten 45 bis 71, beschrieben.

Selbstverständlich können Mischungen der oben genannten Verbindungen mit mindestens zwei gegenüber Isocyanaten reaktionsfähigen Wasserstoffatomen mit einem Molekulargewicht von 400 bis 10.000, z. B. Mischungen von Polyethern und Polyestern, eingesetzt werden.

Als erfindungsgemäß einzusetzende Ausgangskomponenten kommen weiter aliphatische, cycloaliphatische, araliphatische, aromatische und heterocyclische Polyisocyanate in Betracht, wie sie z. B. von W. Siefken in Justus Liebigs Annalen der Chemie, 562, Seiten 75 bis 136, beschrieben werden, beispielsweise Ethylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DAS 1 202 785), 2,4- und 2,6-Hexahydrotoluylendiisocyanat sowie beliebige Gemische dieser Isomeren, Hexahydro-1,3- und/oder -1,4-phenylendiisocyanat, Perhydro-2,4′- und/oder -4,4′-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4′- und/oder -4,4′-diisocyanat, Naphthylen-1,5-diisocyanat, Triphenylmethan-4,4′4″-triisocyanat, Polyphenyl-polymethylen-polyisocyanate, wie sie durch Anilin-Formaldehyd-Kondensation und anschließende Phosgenierung erhalten und z. B. in den britischen Patentschriften 874 430 und 848 671 beschrieben werden, perchlorierte Arylpolyisocyanate, wie sie z. B. in der deutschen Auslegeschrift 1 157 601 beschrieben werden, Carbodiimidgruppen aufweisende Polyisocyanate, wie sie in der deutschen Patentschrift 1 092 007 beschrieben werden, Diisocyanate, wie sie in der amerikanischen Patentschrift 3 492 330 beschrieben werden, Allophanatgruppen aufweisende Polyisocyanate, wie sie z. B. in der britischen Patentschrift 994 890, der belgischen Patentschrift 761 626 und der veröffentlichten holländischen Patentanmeldung 7 102 524 beschrieben werden, Isocyanatgruppen aufweisende Polyisocyanate, wie sie z. B. in den deutschen Patentschriften 1 022 789, 1 222 067 und 1 027 394 sowie in den deutschen Offenlegungsschriften 1 929 034 und 2 004 048 beschrieben werden, Urethangruppen aufweisende Polyisocyanate, wie sie z. B. in der belgischen Patentschrift 752 261 oder in der amerikanischen Patentschrift 3 394 164 beschrieben werden, acylierte Harnstoffgruppen aufweisende Polyisocyanate gemäß der deutschen Patentschrift 1 230 778, Biuretgruppen aufweisende Polyisocyanate, wie sie z. B. in der deutsche Patentschrift 1 101 394, in der britischen Patentschrift 889 050 und in der französischen Patentschrift 7 017 514 beschrieben werden, durch Telemerisationsreaktionen hergestellte Polyisocyanate, wie sie z. B. in der belgischen Patentschrift 723 640 beschrieben werden, Estergruppen aufweisende Polyisocyanate, wie sie z. B. in den britischen Patentschriften 965 474 und 1 072 956, in der amerikanischen Patentschrift 3 567 763 und in der deutschen Patentschrift 1 231 688 genannt werden, sowie Umsetzungsprodukte der obengenannten Isocyanate mit Acetalen gemäß der deutschen Patentschrift 1 072 385.

Es ist auch möglich, die bei der technischen Isocyanatherstellung anfallenden Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen dieser Polyisocyanate zu verwenden.

Besonders bevorzugt werden in der Regel die technisch leicht zugänglichen Polyisocyanate, z. B. das 2,4- und 2,6-Toluylendiisocyanat sowie beliebige Gemische dieser Isomeren ("TDI"), Polyphenylpolymethylen-polyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate").

Die Polyisocyanate bzw. die aus den genannten Polyisocyanaten und den oben erwähnten höher- und/oder niedermolekularen Polyolen hergestellten Isocyanat-Prepolymeren sollen bei der Reaktion mit dem gepulverten bzw. suspendierten aromatischen Diamin in flüssiger Form vorliegen.

Sollen nach dem erfindungsgemäßen Verfahren Polyurethanschäume hergestellt werden, dann werden Wasser und/oder leicht flüchtige organische Substanzen als Treibmittel mitverwendet. Als organische Treibmittel kommen z. B. Aceton, Ethylacetat, Methanol, Ethanol, halogensubstituierte Alkane wie Methylenchlorid, Chloroform, Ethylidenchlorid, Vinylidenchlorid, Monofluortrichlormethan, Chlordifluormethan, Dichlordifluormethan, ferner Butan, Hexan, Heptan oder Diethylether in Frage. Die Treibwirkung kann auch durch Zusatz von bei höheren Temperaturen unter Abspaltung von Gasen, beispielsweise von Stickstoff, sich zersetzenden Verbindungen, z. B. Azoverbindungen wie Azoisobuttersäurenitril, erzielt werden. Weitere Beispiele für Treibmittel sowie Einzelheiten über die Verwendung von Treibmitteln sind im Kunststoff-Handbuch, Band VII, herausgegeben von Vieweg und Höchtlen, Carl-Hanser-Verlag, München 1966, z. B. auf den Seiten 108 und 109, 453 und 455 und 507 bis 510 beschrieben.

Erfindungsgemäß können ferner oft Katalysatoren mitverwendet werden. Als mitzuverwendende Katalysatoren kommen solche der an sich bekannten Art in Frage, z. B. tertiäre Amine, wie Triethylamin, Tributylamin, N-Methyl-morpholin, N-Ethyl-morpholin, N,N,N′,N′-Tetramethyl-ethylendiamin, 1,4-Diazabicyclo-(2,2,2)-octan, N-Methyl-N′-dimethylaminoethyl-piperazin, N,N-Dimethylbenzylamin, Bis-(N,N- diethylaminoethyl)-adipat, N,N-Diethylbenzylamin, Pentamethyldiethylentriamin, N,N-Dimethylcyclohexylamin, N,N,N′,N′-Tetramethyl-1,3-butandiamin, N,N-Dimethyl-β- phenylethylamin, 1,2-Dimethylimidazol und 2-Methylimidazol.

Gegenüber Isocyanatgruppen aktive Wasserstoffatome aufweisende tertiäre Amine sind z. B. Triethanolamin, Triisopropanolamin, N-Methyl-diethanolamin, N-Ethyl-diethanolamin, N,N-Dimethyl-ethanolamin sowie deren Umsetzungsprodukte mit Alkylenoxiden wie Propylenoxid und/oder Ethylenoxid.

Als Katalysatoren kommen ferner Silaamine mit Kohlenstoff-Silizium-Bindungen, wie sie z. B. in der deutschen Patentschrift 1 229 290 beschrieben sind, in Frage, z. B. 2,2,4-Trimethyl-2-silamorpholin und 1,3-Diethylaminomethyl-tetramethyl-disiloxan.

Als Katalysatoren kommen auch stickstoffhaltige Basen wie Tetraalkylammoniumhydroxide, ferner

Alkalihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden.

Erfindungsgemäß können auch organische Metallverbindungen, insbesondere organische Zinnverbindungen, als Katalysatoren verwendet werden.

Als organische Zinnverbindungen kommen vorzugsweise Zinn(II)-salze von Carbonsäure wie Zinn(II)-acetat, Zinn(II)-octoat, Zinn(II)-ethylhexoat und Zinn(II)-laurat und die Dialkylzinnsalze von Carbonsäuren, wie z. B. Dibutyl-zinndiacetat, Dibutylzinn-dilaurat, Dibutylzinn-maleat oder Dioctylzinn-diacetat in Betracht.

Weitere Vertreter von erfindungsgemäß zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z. B. auf den Seiten 96 bis 102 beschrieben.

Die Katalysatoren werden in der Regel in einer Menge zwischen etwa 0,001 und 10 Gew.-%, bezogen auf die Menge an Polyhydroxyl-Verbindungen mit einem Molekulargewicht von 400 bis 10.000, eingesetzt.

Erfindungsgemäß können auch oberflächenaktive Zusatzstoffe (Emulgatoren und Schaumstabilisatoren) mitverwendet werden. Als Emulgatoren kommen z. B. die Natriumsalze von Ricinusölsulfonaten oder auch von Fettsäuren oder Salze von Fettsäuren mit Aminen wie ölsaures Diethylamin oder stearinsaures Diethanolamin in Frage. Auch Alkali- oder Ammoniumsalze von Sulfonsäuren wie etwa von Dodecylbenzolsulfonsäure oder Dinaphthylmethandisolfonsäure oder auch von Fettsäuren wie Ricinolsäure oder von polymeren Fettsäuren können als oberflächenaktive Zusatzstoffe mitverwendet werden.

Als Schaumstabilisatoren kommen vor allem wasserlösliche Polyethersiloxane in Frage. Diese Verbindungen sind im allgemeinen so aufgebaut, daß ein Copolymerisat aus Ethylenoxid und Propylenoxid mit einem Polydimethylsiloxanrest verbunden ist. Derartige Schaumstabilisatoren sind z. B. in der amerikanischen Patentschrift 2 764 565 beschrieben.

Erfindungsgemäß können ferner auch Reaktionsverzögerer, z. B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe und Flammschutzmittel der an sich bekannten Art, z. B. Trischlorethylphosphat oder Ammoniumphosphat und -Polyphosphat, ferner Stabilisatoren gegen Alterungs- und Witterungseinflüsse, Weichmacher und fungistatisch und bakteriostatisch wirkende Substanzen, Füllstoffe wie Bariumsulfat, Kieselgur, Ruß oder Schlämmkreide mitverwendet werden.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VI, herausgegeben von Vieweg und Höchtlen, Carl-Hanser-Verlag, München 1966, z. B. auf den Seiten 103 bis 113 beschrieben.

Die Reaktionskomponenten werden erfindungsgemäß nach dem an sich bekannten Einstufenverfahren, dem Prepolymerverfahren oder dem Semiprepolymerverfahren zur Umsetzung gebracht, wobei man sich oft maschineller Einrichtungen bedient, z. B. solcher, die in der amerikanischen Patentschrift 2 764 565 beschrieben werden. Einzelheiten über Verarbeitungseinrichtungen, die auch erfindungsgemäß infrage kommen, werden im Kunststoff-Handbuch, Band VI, herausgegeben von Vieweg und Höchtlen, Carl-Hanser-Verlag, München 1966, z. B. auf den Seiten 121 bis 205 beschrieben.

Die Mengen an Reaktionskomponenten werden im erfindungsgemäßen Verfahren in der Regel so gewählt, daß das Molverhältnis von Polyisocyanaten zu Kettenverlängerer plus Verbindung mit reaktionsfähigen OH-Gruppen - abhängig vom jeweils angewendeten Verarbeitungsverfahren - in der Regel zwischen 0,7 und 1,5 liegt, vorzugsweise zwischen 0,90 und 1,15. Der Prozentgehalt an NCO im Prepolymer, falls über die Prepolymerstufe gearbeitet wird, kann 1,8 bis 6 Gew.-% betragen. Das Molverhältnis von reaktionsfähigem Wasserstoff des Kettenverlängerers zu reaktionsfähigen OH-Gruppen kann in weiten Grenzen variieren, vorzugsweise soll es zwischen 0,4 und 1,5 liegen, wobei weiche bis harte Polyurethan-Typen resultieren. Neben den erfindungsgemäß zu verwendenden Diaminen können als Kettenverlängerer anteilsweise auch weitere Diamine oder auch Diole eingesetzt werden, z. B. solche, wie sie oben bei der Herstellung der Polyhydroxylverbindungen genannt wurden. Der Molenbruch des erfindungsgemäßen Amins im Kettenverlängerer soll aber zwischen 1 und 0,5 liegen, vorzugsweise zwischen 1 und 0,8.

Die Durchführung des erfindungsgemäßen Verfahrens kann auch in einem 2-Stufen-Verfahren erfolgen.

Die mindestens zwei Hydroxylgruppen aufweisende Polyolkomponente vom Mol-Gew. 400 bis 10.000 wird in an sich bekannter Weise mit einem Übermaß an Diisocyanat zu dem NCO-Gruppen aufweisenden Voraddukt umgesetzt. Durch NCO-Titration kann der Verlauf der Umsetzung kontrolliert werden. Nach Beendigung der Polyaddition wird der Diaminodiphenylharnstoff in Form eines festen Pulvers (Teilchengröße = 5 bis 50 µm) unter Verwendung eines geeigneten Rührgeräts eingetragen und die entstehende Suspension innig vermischt.

Man kann aber auch so verfahren, daß das feste Diamin-Pulver zunächst in wenig dem NCO-Voraddukt zugrunde liegenden hochmolekularen flüssigen Polyol vermischt wird. Die so erhaltene Paste oder noch gießbare Suspension kann dann dem NCO-Voraddukt zugesetzt werden. Dieses Verfahren bietet den Vorteil der einfachen Durchführbarkeit.

Die Temperatur bei der Zugabe des Kettenverlängerers hängt von der Beschaffenheit des NCO-Voradduktes ab.

Bei flüssigen NCO-Voraddukten wird der Kettenverlängerer (in Substanz aber bevorzugt in Polyol/Suspension) bei Raumtemperatur zugesetzt. Bei hochwirksamen oder festen NCO-Prepolymeren erfolgt die Zugabe bei derjenigen Temperatur, bei der ein einwandfreier Gießverlauf der Ansätze gewährleistet ist. Diese Temperatur kann dann bei 60 bis 80 ° C liegen. Eine Vorreaktion der NCO-Prepolymeren und des aromatischen Diamins darf jedoch in keinem Falle erfolgen, da jegliche unkontrollierbare Viskositätserhöhung des Ansatzes die weitere Verarbeitung im normalen Gießverfahren erschwert.

Nach Zugabe des Diamins wird der Reaktionsansatz nach kurzer Zeit im Vakuum entgast.

Die Verarbeitungszeit (Topfzeit) dieser Systeme ist abhängig von der Art des Diaminodiphenylharnstoffs und dem NCO-Voraddukt. Selbstverständlich darf die Verarbeitungstemperatur nicht in zu hohem Bereich liegen, da dann Vorreaktionen nicht auszuschließen sind.

Die Verarbeitung der erfindungsgemäßen Reaktivsysteme richtet sich nach deren Beschaffenheit. Flüssige, bei Raumtemperatur gießbare Systeme lassen sich im Gießprozeß verarbeiten, gegebenenfalls werden sie vor der Verarbeitung kurz erwärmt, z. B. auf 50 bis 70 ° C.

Nicht mehr gießbare, aber noch verlaufende Systeme können z. B. mit einer Rakel auf gewünschte Unterlagen aufgebracht werden und anschließend durch Hitzestoß verfestigt werden.

Plastische System (Pasten) können unter Druck- und Formgebung in der Hitze verpreßt werden, wobei bei 120 ° C bereits 5 bis 15 Minuten zur Verfestigung ausreichend sind.

Feste Systeme, insbesondere auf Basis höherschmelzender Ausgangspolyole (45 bis 65 ° C) werden entweder unter Druck und Formgebung (Spritzguß) oder etwa bei oder oberhalb der Schmelztemperatur des Polyols verarbeitet. Man kann so verfahren, daß man die vorher hergestellten Langzeitsysteme in Form fester Granulate in eine über den Schmelzpunkt des Polyols aufgewärmte Form (im allgemeinen unterhalb 70 ° C) einbringt. Danach wird nach dem Aufschmelzen der Granulate und der damit gegebenen Werkzeugfüllung die Form auf 100 bis 120 ° C erwärmt und der Inhalt verfestigt.

Die Verfestigungstemperatur der erfindungsgemäßen Reaktivsysteme liegt in einem Bereich von 100 bis 180 ° C.

Mit zunehmender Verfestigungstemperatur nimmt die Verfestigungszeit ab. Die Ausheizdauer kann je nach Temperatur von weniger als 1 Minute bis zu mehreren Stunden betragen. Manchmal ist es vorteilhaft, die Kunststoffe nach Entformen noch einige Zeit bei 100 ° C zu tempern, um eine vollständige Durchhärtung zu gewährleisten.

Erfindungsgemäß hergestellte Elastomere finden vielseitige Anwendung, z. B. für mechanisch stark beanspruchte Formkörper wie Reifen, Rollen, Keilriemen oder Dichtungen, die thermisch oder chemisch stark beansprucht werden, für Heißwasserrohre oder Motoren oder zur Herstellung von Folien, Textilbeschichtungen und Polyurethanpulvern.

Die Kettenverlängerung kann auch in Gegenwart der oben beschriebenen Treibmittel und Zusatzstoffe, bevorzugt in geschlossenen Formen, ausgeführt werden, wobei Schäume mit zelligem Kern und kompakter Oberfläche gebildet werden.

Die nach dem erfindungsgemäßen Verfahren zugänglichen elastischen und halbelastischen Schaumstoffe werden beispielsweise als Polstermaterialien, Matratzen, Verpackungsmaterial und wegen ihrer Flammfestigkeit auch in jenen Bereichen verwendet, wo diese Eigenschaften besonders wichtig sind, wie z. B. im Automobil- und Flugzeugbau und im allgemeinen Verkehrswesen. Die Schaumstoffe können dabei entweder nach dem Formschäumungsverfahren hergestellt werden oder durch Konfektionierung aus blockgeschäumtem Material erhalten werden.

Die folgenden Beispiele erläutern das erfindungsgemäße Verfahren. Wo nicht anders vermerkt, sind Zahlenwerte als Gewichtsteile bzw. Gewichtsprozente zu verstehen.

<u>Beispiel 1</u>

Durch Umsetzung eines aus Adipinsäure und Ethylenglykol hergestellten linearen Polyesters (OH-Zahl = 56, Mol-Gew. = 2.000) mit 2,4-Diisocyanatoluol (Mol-Verhältnis 1:2) erhält man bei 60 bis 80 ° C in üblicher Verfahrenstechnik ein NCO-Gruppen enthaltendes Voraddukt mit einem NCO-Gehalt von 3,6 bis 3,8 %.

200 g dieser NCO-Komponente wurden bei 40 bis 50 ° C mit 23,2 g 4,4′-Diaminodiphenylharnstoff, der

gemäß US 2 503 797 aus p-Phenylendiamin und Harnstoff in Wasser hergestellt wurde, innig vermischt. Der Teilchendurchmesser des festen 4,4′-Diaminodiphenylharnstoffs betrug 10 bis 40 µm. Die Suspension wird mittels eines Wasserstrahlvakuums gründlich entgast.

Das so erhaltene Reaktivsystem verhält sich auch bei einer Temperatur von 40 bis 50 ° C mindestens über eine Woche lagerstabil. Es erfolgt keine Vorreaktion, die zu einem erheblichen Viskositätsanstieg des Ansatzes führt.

Das flüssige Reaktivsystem wird in eine vorgewärmte und mit Trennmittel versehene Form gegossen, die dann bei 140 bis 150 ° C aufgeheizt wird.

Nach 1 bis 2 Stunden erfolgt Verfestigung des Ansatzes und der Formling kann aus der Form genommen werden. Er wird vorteilhat nach weiteren 4 Stunden bei dieser Temperatur nachgetempert.

Man erhält ein hochelastisches PUR-Elastomer mit folgenden mechanischen Eigenschaften:

| | | |
|---|---|---|
| Modul (100 %) | (MPa) | 12,5 |
| Zugfestigkeit | (MPa) | 31 |
| Bruchdehnung | (%) | 600 |
| Weiterreißfestigkeit | (KN/m) | 105 |
| Elastizität | (%) | 38 |
| Härte | Shore A | 95 |

Dieses Elastomer besitzt einen hohen Wärmestand.

Beispiel 2

Aus einem linearen Polypropylenglykolether (OH-Zahl = 56, Mol-Gew. 2.000) und 2,4-Diisocyanatotoluol (Molverhältnis 1:2) wurde bei 70 bis 80 ° C eine NCO-Endgruppen aufweisendes Voraddukt mit einem NCO-Gehalt von 3,5 % hergestellt. 200 g des flüssigen Vorproduktes werden bei Raumtemperatur oder leicht erhöhter Temperatur (40 bis 50 ° C) mit 21,4 g 4,4′-Diaminodiphenylharnstoff vermischt und die Suspension nach 1/4 bis 1/2 Stunde im Wasserstrahlvakuum entgast. Man erhält ein bei Raumtemperatur oder leicht erhöhter Temperatur lagerstabiles Einkomponentensystem. Erst nach 2 bis 3 Monaten erfolgt allmählicher Viskositätsanstieg.

Die Verfestigungszeit des Reaktionsansatzes beträgt bei 140 bis 150 ° C ca. 5 bis 6 Stunden. Das dabei entstehende PUR-Elastomer weist folgende mechanischen Eigenschaften auf:

| | | |
|---|---|---|
| Modul (100 %) | (MPa) | 10 |
| Zugfestigkeit | (MPa) | 15 |
| Bruchdehnung | (%) | 550 |
| Weiterreißfestigkeit | (KN/m) | 35 |
| Elastizität | (%) | 40 |
| Härte | Shore A | 90 |

Dieses Elastomer zeigt einen hohen Wärmestand und kann ohne sichtbaren Einfluß mehrere Stunden auf 170 ° C erwärmt werden.

Beispiel 2a (Vergleich)

200 g des in Beispiel 2 genannten NCO-Voradduktes aus Polypropylenglykolether und TDI (NCO = 3,5%) wurden unter Rühren mit 20,84 g 2,2′-Diaminodiphenylharnstoff in Form eines feinen Pulvers vermischt. Diese Reaktionsmischung verhält sich bei Raumtemperatur über mehrere Stunden lagerstabil.

Das in üblicher Verfahrensweise hergestellte Polyurethanharnstoff-Elastomer zeigt folgendes mechanisches Werteniveau. Die Verfestigungszeit betrug dabei 1,5 Stunden bei 120 ° C.

| | | |
|---|---|---|
| Modul (100 %) | (MPa) | 6,5 |
| Zugfestigkeit | (MPa) | 10,3 |
| Bruchdehnung | (%) | 400 |
| Weiterreißfestigkeit | (KN/m) | 25 |
| Elastizität | (%) | 40 |
| Härte | Shore A | 85 |

Dieses Elastomer zeigt ein durchaus akzeptables Eigenschaftsbild. Im Wärmetest verhält es sich jedoch unerwartet schlecht.

Der Probekörper wurde nach einer Lagerzeit (Reifezeit) von

1. 2 Stunden
2. 1 Tag
3. 3 Tage

bei Raumtemperatur in einem Heizschrank auf 140 bis 150 °C erwärmt. Während alle Proben des erfindungsgemäßen Verfahrens (Basis: m,m′ und p,p′-Diaminodiphenylharnstoffe) diesen Hitzetest ohne sichtbaren Einfluß überstehen, zeigt das mit dem o,o′-Diaminodiphenylharnstoff hergestellte Polyurethanharnstoff-Elastomer ein völlig unerwartetes Ergebnis. Bereits nach kurzer Hitzeeinwirkung verliert die Probe ihre Formstabilität und man erhält eine flüssige Schmelze. Auch in kaltem Zustand besitzt dieses geschmolzene Produkt keinerlei elastischen Charakter. Der ursprünglich hochelastische Formkörper ist zerstört.

Beispiel 3

Wird der in Beispiel 2 genannte lineare Polypropylenglykolether (Polymerisation von Propylenoxid; 100 % PO-Einheiten) durch einen linearen Polypropylenglykolether mit 75 % Propylenoxid und 25 % Ethylenoxid-Einheiten ersetzt, so erhält man mit dem genannten Diisocyanat (TDI) ein NCO-Voraddukt mit einem NCO-Gehalt von 3,5 %.

Zu 200 g dieses NCO-Propolymeren wurden unter Rühren 21,4 g 4,4′-Diaminodiphenylharnstoff zugesetzt. Danach wird 1/4 bis 1/2 Stunde entgast. Die bei Raumtemperatur flüssige Suspension verhält sich ebenfalls lagerstabil. Die Verfestigungszeit dieses Systems ist aber im Vergleich zu den in Beispiel 2 beschriebenen wesentlich kürzer. Man erhält bereits nach ca. 1/2 Stunde bei 140 bis 150 °C eine hochwertiges Polyurethanharnstoff-Elastomer mit dem folgenden Eigenschaftsniveau:

| | | |
|---|---|---|
| Modul (100 %) | (MPa) | 10,2 |
| Zugfestigkeit | (MPa) | 14,5 |
| Bruchdehnung | (%) | 550 |
| Weiterreißfestigkeit | (KN/m) | 34 |
| Elastizität | (%) | 38 |
| Härte | Shore A | 91 |

Beispiel 4

200 g des in Beispiel 2 beschriebenen NCO-Voradduktes auf Basis eines linearen Polypropylenglykolethers und TDI mit einem NCO-Gehalt von 3,5 % wurden mit 30 g 3,3′-Diamino-4,4′-dimethyl-diphenylharnstoff (gemäß DE-A 36 13 249) durch alkalische Hydrolyse von 3,3′-Diisocyanato-n,n′-dimethyldiphenylharnstoff hergestellt) vermischt.

Zur Bestimmung der Lagerstabilität bei Raumtemperatur wird die Viskosität des flüssigen Reaktionsansatzes über einige Tage bestimmt. Es ergibt sich folgender Viskositätsverlauf:

| | Viskosität/RT | |
|---|---|---|
| 1. Tag (Herstellung | 25.500 Pa.s/RT | |
| 2. Tag<br>3. Tag<br>4. Tag | 28.000 }<br>28.500 }<br>29.300 } | praktisch lagerstabil |
| 6. Tag<br>8. Tag | 32.800<br>58.000 | |

Nach den vorliegenden Ergebnissen verhält sich die Reaktionsmischung über etwa 4 Tage praktisch lagerstabil.

Die Hitzeverfestigung solcher flüssigen NCO-Voraddukt/Diaminodiphenylharnstof-Suspensionen erfolgt bereits bei einer Temperatur von 120 °C. Nach etwa 1- bis 2-stündiger Hitzeeinwirkung und nachträglicher Temperung der entformten PUR-Teile (3 bis 4 Stunden/120 °C) erhält man die Endprodukte mit nachstehenden mechanischem Wertniveau:

| | | |
|---|---|---|
| Modul (100 %) | (MPa) | 12,5 |
| Zugfestigkeit | (MPa) | 14,5 |
| Bruchdehnung | (%) | 400 |
| Weiterreißfestigkeit | (KN/m) | 30,5 |
| Elastizität | (%) | 40 |
| Härte | Shore A | 91 |

Beispiel 5

Um die in DE-A 3 429 149 beschriebene Retardierung (Desaktivierung) von festen Diaminen mit Hilfe von aliphatischen Polyisocyanaten zu erzielen, werden 100 g 3,3'-Diamino-4,4'-dimethyldiphenylharnstoff in pulveriger Form in 500 ml Ligroin suspendiert. Danach wurden unter kräftigem Rühren 15 g einer Lösung von 7,5 g trimeren 1,6-Diisocyanatohexan (Isocyanurat, NCO = 24,5 %) in 7,5 g Toluol zugefügt. Nach 3- bis 4-stündigem Rühren bei Raumtemperatur wird der Reaktionsansatz noch ca. 2 Stunden auf 60 bis 70 °C erwärmt. Der so modifizierte Diaminodiphenylharnstoff wurde abgesaugt und durch Trocknung vom Rest-Ligroin befreit.

Wie in Beispiel 4 angegeben, wurden 30 g des retardierten Diamins mit 200 g NCO-Voraddukt (NCO = 3,5 %) vermischt. Man erhält eine Suspension, die auch nach längerer Lagerung bei R.T. (2 Wochen) keinen merklichen Viskositätsanstieg zeigt. Auch dieses System kann bei einer Temperatur von 120 °C innerhalb kurzer Zeit (1 bis 2 Stunden) verfestigt werden. Das mechanische Werteniveau der erhaltenen Elastomerer ist mit dem in Beispiel 4 angegebenen vergleichbar.

Beispiel 6

1. 60 g eines linearen Polypropylenglykolethers vom Molgewicht 2.000 (OH-Zahl = 56) wurden mit 30 g fein gepulvertem 3,3'-Diamino-4,4'-dimethyldiphenylharnstoff (NH-Zahl = 290) innig vermischt. Der Kettenverlängerer besitzt bedingt durch ein Herstellungsverfahren (alkalische Hydrolyse von 3,3'-Diisocyanato-4,4'-dimethyldiphenylharnstoff) einen Gehalt von höhermolekularen Anteilen (Oligomere). Man erhält eine bei R.T. noch gießbare Suspension A.

Dieses Gemisch A wird bei Raumtemperatur zu 163 g eines NCO-Voradduktes aus einem linearen Polypropylenglykolether mit dem Mol-Gew. von 1.000 und TDI (mit einem NCO-Gehalt von 5,7 %) zugesetzt. Das entstehende Reaktivsystem ist über ein langen Zeitraum verarbeitbar, da der Viskositätsaufbau des Systems nur sehr langsam erfolgt. Nach einem Zeitraum von ca. 15 Stunden ist die Viskosität so erhöht, daß eine Verarbeitung im Gießverfahren nicht mehr möglich ist.

2. Zu der Suspension A (Diaminodiphenylharnstoff/Polyether-Suspension werden 1,5 g trimeres 1,6-Diisocyanatohexan (NCO = 23 %) zugesetzt. Danach wird diese Mischung noch 3 bis 4 Stunden auf 80 °C erwärmt. Im IR-Spektrum ist nunmehr keine NCO-Bande mehr nachweisbar. Diese so modifizierte Suspension wird mit 163 g des obengenannten Voradduktes (NCO = 5,7 %) vermischt. Die OH-Gruppen des Polypropylenglykolethers (Suspendierkomponente für das feste Diamin) reagieren mit dem NCO-Voraddukt langsam ab. Die Verarbeitung wird dabei nicht beeinträchtigt. Nach ca, 24 Stunden ist dieser NCO/OH-Reaktion beendet und man erhält das Reaktivsystem mit einer Viskosität von 10.000 bis 12.000 Pa.s/RT.

Dieses System ist nunmehr über mehrere Wochen lagerstabil.

Das durch Hitzeverwertung bei 120 bis 130 °C erhaltene Polyurethanharnstoff-Elastomer zeigt folgende mechanischen Eigenschaften:

| | | |
|---|---|---|
| Modul (100 %) | (MPa) | 7,5 |
| Zugfestigkeit | (MPa) | 12,6 |
| Bruchdehnung | (%) | 550 |
| Weiterreißfestigkeit | (KN/m) | 35 |
| Elastizität | (%) | 45 |
| Härte | Shore A | 86 |

Beispiel 7

200 g des in Beispiel 1 erwähnten NCO-Voradduktes auf Basis von Polyester und TDI (NCO = 3,6 bis 3,8 °C) werden bei einer Temperatur von 40 bis 50 °C (Schmelze) mit 32,6 g 3,3′-Diamino-4,4,′-dimethyldiphenylharnstoffvermischt. Bei dieser Temperatur zeigt die gebildete Suspension eine Lagerstabilität von ca. 1 bis 2 Stunden. Bei 120 °C erfolgt die Verfestigung des Reaktionsansatzes bereits innerhalb von 2 bis 5 Minuten. Man erhält in üblicher Gießtechnik hochwertige PUR-Formkörper mit folgenden mechanischen Eigenschaften.

| | | |
|---|---|---|
| Modul (100 %) | (MPa) | 10,0 |
| Zugfestigkeit | (MPa) | 25 |
| Bruchdehnung | (%) | 500 |
| Weiterreißfestigkeit | (KN/m) | 72 |
| Elastizität | (%) | 38 |
| Härte | Shore A | 93 |

Beispiel 8

1.000 g (1,0 Mol) eines linearen Polypropylenglykolethers (MG = 1.000, OH-Zahl = 112) werden mit 672 g (4,0 Mol) 1,6-Diisocyanatohexan vermischt. Nach 6- bis 8-stündigem Erwärmen auf 80 °C wird das überschüssige Diisocyanat mittels eines Dünnschichtverdampfers aus dem Reaktionsansatz entfernt. Das nunmehr monomerfreie NCO-Voraddukt besitzt einen NCO-Gehalt von 5,9 %.

Zu 200 g des NCO-Voradduktes werden 50,4 g 3,3′-Diamino-4,4′-dimethyldiphenylharnstoff zugesetzt und die Suspension mit Hilfe eines geeigneten Rührwerkes bei Raumtemperatur gut homogemisiert. Danach wird in $H_2O$-Strahlvakuum entgast. Der so erhaltene Reaktionsansatz bleibt über einen Zeitraum von mindestens 2 Tage gut gießbar. Es erfolgt keine starke Viskositätserhöhung.

Das in der beschriebenen Arbeitsweise erhaltenen PUR-Elastomer (Verfestigungsbedingungen = 2 Stunden/150 °C) zeigt folgendes mechanisches Werteniveau:

| | | |
|---|---|---|
| Modul (100 %) | (MPa) | 11,1 |
| Zugfestigkeit | (MPa) | 18,5 |
| Bruchdehnung | (%) | 350 |
| Weiterreißfestigkeit | (KN/m) | 45 |
| Elastizität | (%) | 48 |
| Härte | Shore A/D | 95/50 |

Beispiel 9

Zu einer Suspension von 200 g 3,3'-Diamino-4,4'-dimethyldiphenylharnstoff in 400 g eines linearen Polypropylenglykolethers (Mol-Gew. 2000, OH-Zahl 56) werden 20 g einer Lösung von 10 g trimeren 1,6-Diisocyanatohexan (Isocyanurat, NCO = 24,5 %) in 10 g Toluol zugesetzt. Der Reaktionsansatz wird unter Rühren 4 bis 5 Stunden bei 80 bis 100 °C gehalten. Danach wird das zugesetzte Toluol (10 g) im Vakuum entfernt. Man erhält nunmehr den im Polypropylenglykolether suspendierten Diaminodiphenylharnstoff in desaktivierter Form (DE-A 3 429 149).

160 g dieser Suspension werden mit 200 g eines linearen Polypropylenglykolethers (Mol.-Gew. 1000, OH-Zahl 112) vermischt. Danach erfolgt Zusatz von 111 g einer Schmelze von 4,4'-Diisocyanato-diphenylmethan (NCO 33,5 %, Temperatur 40 - 50 °C). Nach dem Entgasen im Wasserstrahlvakuum wird der Ansatz in eine mit Trennmittel versehene Form gegossen. Die Verarbeitungszeit der Reaktionsmischung beträgt 3 bis 4 Stunden. Die Verfestigung erfolgt dann in der Hitze. Nach etwa 3 Stunden erhält man bei 130 bis 150 °C einen hochelastischen, zähen Polyurethan-Harnstoff-Formkörper mit einer Härte von 85 A.

Vergleichsbeispiel

Wird der obige Reaktionsablauf nicht mit desaktiviertem 3,3'-Diamino-4,4'-dimethyldiphenylharnstoff durchgeführt, so wird ein ganz anderes Ergebnis erhalten. Infolge der sehr raschen Vorreaktion des Diaminodiphenylharnstoffs mit dem 4,4'-Diisocyanatodiphenylmethan entsteht in wenigen Minuten ein Polyharnstoff, der sich als inerter Füllstoff verhält und nicht in das PUR-System eingebaut wird. Die Folge davon ist, daß dieser Reaktionsansatz eine unzureichende Verarbeitungszeit besitzt (rasche Viskositätserhöhung). Das in der Hitze entstandene Festprodukt weist keine Festigkeit auf und bricht auf Zug- oder Druckbeanspruchung.

## Patentansprüche

## Patentansprüche für folgende Vertragsstaaten : AT, BE, CH, DE, FR, GB, IT, LI, NL, SE

1. Verfahren zur Herstellung von Polyurethanharnstoff-Elastomeren durch ein- oder mehrstufige, lösungsmittelfreie Umsetzung von
   a) Polyisocyanaten,
   b) höhermolekularen $NH_2$- oder OH-Gruppen aufweisenden Verbindungen sowie gegebenenfalls
   c) niedermolekulare Polyhydroxylverbindungen bzw. aromatische Diamine als Kettenverlängerungsmittel,

   dadurch gekennzeichnet, daß man Polyisocyanate und OH- bzw. $NH_2$-Gruppen aufweisende Verbindungen bzw. daraus hergestellte NCO-Prepolymere mit in feinverteilter, gegebenenfalls retardierter Form vorliegenden Diaminodiphenylharnstoffen der allgemeinen Formel

   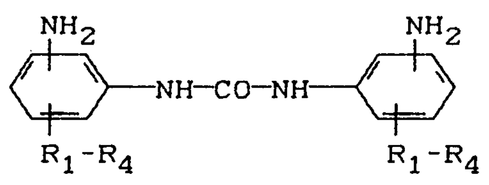

   wobei sich die $NH_2$-Gruppe in m- und/oder p-Stellung zur Harnstoffgruppe befindet und $R^1$, $R^2$, $R^3$ und $R^4$ - gleich oder verschieden - und unabhängig voneinander - für H oder einen $C_1$-$C_6$-Alkylrest stehen, in heterogener Phase bei Temperaturen unterhalb des Schmelzpunktes des Diaminodiphenylharnstoffs umsetzt, wobei der Molenbruch des Diaminodiphenylharnstoffs im Kettenverlängerer zwischen 1 und 0,5 liegt und wobei beim Abmischen der Reaktionskomponenten eine vorzeitige Polyaddition bei Raumtemperatur oder leicht erhöhter Temperatur auszuschließen ist.

2. Verfahren nach Anspruch 1, dadurch gekennzeichnet, daß als Komponente b) ein Polyol im Molbereich von 400 - 10.000 verwendet wird, in dem sich der Diaminodiphenylharnstoff bei Raumtemperatur nur schlecht, bei Wärme jedoch gut löst.

3. Verfahren nach Anspruch 1 oder 2, dadurch gekennzeichnet, daß der Diaminodiphenylharnstoff in Form einer Suspension in Polyol vorliegt, wobei das Gewichtsverhältnis Diaminodiphenylharnstoff zu Polyol = 1,0:0,5 bis 5,0, vorzugsweise 1,0:1,0 bis 2,0 beträgt.

4. Verfahren nach einem der Ansprüche 1 bis 3, dadurch gekennzeichnet, daß eine Diaminodiphenylharnstoff/Polyol-Suspension eingesetzt wird, bei der 0,05 bis 20 $NH_2$-Äquivalente des Kettenverlängerers in einem vorangegangenen Arbeitsschritt mit einem Polyisocyanat umgesetzt wurden.

5. Verfahren nach einem der Ansprüche 1 bis 4, dadurch gekennzeichnet, daß als fester Kettenverlängerer 3,3'-Diamino-4,4'-dimethyl-diphenylharnstoff und/ oder 4,4'-Diaminodiphenylharnstoff eingesetzt werden.

6. In heterogener Phase vorliegende und bei Raumtemperatur oder leicht erhöhter Temperatur keine Polyaddition eingehende Reaktionsgemische aus (A) endständige NCO-Gruppen aufweisenden Reaktionsprodukten aus Polyhydroxylverbindungen mit einem Molgewicht von 400 bis 10.000 und Polyisocyanaten und (B) feinverteilten gegebenenfalls in retardierter Form vorliegenden Diaminodiphenylharnstoffen der allgemeinen Formel

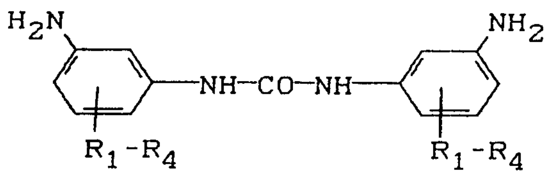

wobei sich die $NH_2$-Gruppe in m- und/oder p-Stellung zur Harnstoffgruppe befindet und $R^1$, $R^2$, $R^3$ und $R^4$ gleich oder verschieden und unabhängig voneinander für H oder einen $C_1$-$C_6$-Alkylrest stehen.

**Patentansprüche für folgenden Vertragsstaat : ES**

1. Verfahren zur Herstellung von Polyurethanharnstoff-Elastomeren durch ein- oder mehrstufige, lösungsmittelfreie Umsetzung von
   a) Polyisocyanaten,
   b) höhermolekularen $NH_2$- oder OH-Gruppen aufweisenden Verbindungen sowie gegebenenfalls
   c) niedermolekulare Polyhydroxylverbindungen bzw. aromatische Diamine als Kettenverlängerungsmittel,

   dadurch gekennzeichnet, daß man Polyisocyanate und OH- bzw. $NH_2$-Gruppen aufweisende Verbindungen bzw. daraus hergestellte NCO-Prepolymere mit in feinverteilter, gegebenenfalls retardierter Form vorliegenden Diaminodiphenylharnstoffen der allgemeinen Formel

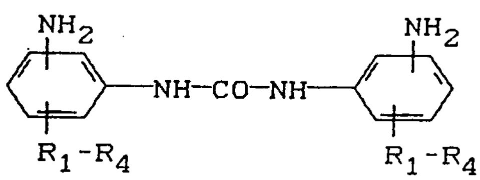

wobei sich die $NH_2$-Gruppe in m- und/oder p-Stellung zur Harnstoffgruppe befindet und $R^1$, $R^2$, $R^3$ und $R^4$ - gleich oder verschieden - und unabhängig voneinander - für H oder einen $C_1$-$C_6$-Alkylrest stehen, in heterogener Phase bei Temperaturen unterhalb des Schmelzpunktes des Diaminodiphenylharnstoffs umsetzt, wobei der Molenbruch des Diaminodiphenylharnstoffs im Kettenverlängerer zwischen 1 und 0,5 liegt und wobei beim Abmischen der Reaktionskomponenten eine Vorzeitige Polyaddition bei Raumtemperatur oder leicht erhöhter Temperatur auszuschließen ist.

2. Verfahren nach Anspruch 1, dadurch gekennzeichnet, daß als Komponente b) ein Polyol im Molbereich von 400 - 10.000 verwendet wird, in dem sich der Diaminodiphenylharnstoff bei Raumtemperatur nur schlecht, bei Wärme jedoch gut löst.

3. Verfahren nach Anspruch 1 oder 2, dadurch gekennzeichnet, daß der Diaminodiphenylharnstoff in Form

einer Suspension in Polyol vorliegt, wobei das Gewichtsverhältnis Diaminodiphenylharnstoff zu Polyol = 1,0:0,5 bis 5,0, vorzugsweise 1,0:1,0 bis 2,0 beträgt.

**4.** Verfahren nach einem der Ansprüche 1 bis 3, dadurch gekennzeichnet, daß eine Diaminodiphenylharnstoff/Polyol-Suspension eingesetzt wird, bei der 0,05 bis 20 $NH_2$-Äquivalente des Kettenverlängerers in einem vorangegangenen Arbeitsschritt mit einem Polyisocyanat umgesetzt wurden.

**5.** Verfahren nach einem der Ansprüche 1 bis 4, dadurch gekennzeichnet, daß als fester Kettenverlängerer 3,3'-Diamino-4,4'-dimethyl-diphenylharnstoff und/ oder 4,4'-Diaminodiphenylharnstoff eingesetzt werden.

**Claims**
**Claims for the following Contracting States : AT, BE, CH, DE, FR, GB, IT, LI, NL, SE**

**1.** A process for the production of polyurethane urea elastomers by single- or multistage solventless reaction of
a) polyisocyanates,
b) relatively high molecular weight compounds containing $NH_2$ or OH groups and, optionally,
c) low molecular weight polyhydroxyl compounds or aromatic diamines as chain-extending agents,
characterized in that polyisocyanates and compounds containing OH or $NH_2$ groups or NCO prepolymers produced therefrom are reacted in heterogeneous phase with finely divided, optionally retarded diaminodiphenyl ureas corresponding to the following general formula

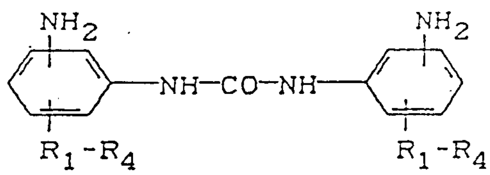

in which the $NH_2$ group is in the m- and/or p-position to the urea group and $R^1$, $R^2$, $R^3$ and $R^4$ may be the same or different and, independently of one another, represent H or a $C_{1-6}$ alkyl radical,
at temperatures below the melting point of the diaminodiphenyl urea,
the mole fraction of the diaminodiphenyl urea in the chain extender being between 1 and 0.5 and measures having to be taken to prevent premature polyaddition at room temperature or slightly elevated temperature during mixing of the reaction components.

**2.** A process as claimed in claim 1, characterized in that a polyol having a molecular weight in the range from 400 to 10,000, in which the diaminodiphenyl urea is only sparingly soluble at room temperature, but readily soluble on heating, is used as component b).

**3.** A process as claimed in claim 1 or 2, characterized in that the diaminodiphenyl urea is present in the form of a suspension in polyol, the ratio by weight of diaminodiphenyl urea to polyol being 1.0:0.5 to 5.0 and preferably 1.0:1.0 to 2.0.

**4.** A process as claimed in any of claims 1 to 3, characterized in that a diaminodiphenyl urea/polyol suspension is used in which 0.05 to 20 $NH_2$ equivalents of the chain extender were reacted with a polyisocyanate in a preliminary step.

**5.** A process as claimed in any of claims 1 to 4, characterized in that 3,3'-diamino-4,4'-dimethyl diphenyl urea and/or 4,4'-diaminodiphenyl urea is/are used as solid chain extender.

**6.** Heterogeneous reaction mixtures which do not enter into polyaddition reactions at room temperature or slightly elevated temperature of
(A) NCO-terminated reaction products of polyhydroxyl compounds having a molecular weight of 400 to 10,000 and polyisocyanates and

(B) finely divided, optionally retarded diaminodiphenyl ureas corresponding to the following general formula

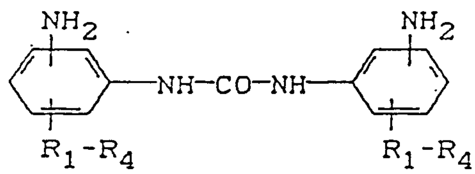

in which the $NH_2$ group is in the m- and/or p-position to the urea group and $R^1$, $R^2$, $R^3$ and $R^4$ may be the same or different and, independently of one another, represent H or a $C_{1-6}$ alkyl radical.

**Claims for the following Contracting State : ES**

**1.** A process for the production of polyurethane urea elastomers by single- or multistage solventless reaction of
a) polyisocyanates,
b) relatively high molecular weight compounds containing $NH_2$ or OH groups and, optionally,
c) low molecular weight polyhydroxyl compounds or aromatic diamines as chain-extending agents,
characterized in that polyisocyanates and compounds containing OH or $NH_2$ groups or NCO prepolymers produced therefrom are reacted in heterogeneous phase with finely divided, optionally retarded diaminodiphenyl ureas corresponding to the following general formula

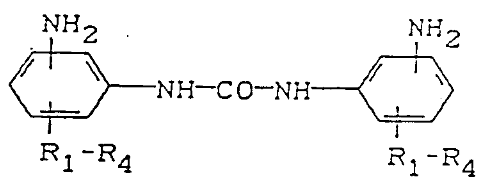

in which the $NH_2$ group is in the m- and/or p-position to the urea group and $R^1$, $R^2$, $R^3$ and $R^4$ may be the same or different and, independently of one another, represent H or a $C_{1-6}$ alkyl radical,
at temperatures below the melting point of the diaminodiphenyl urea,
the mole fraction of the diaminodiphenyl urea in the chain extender being between 1 and 0.5 and measures having to be taken to prevent premature polyaddition at room temperature or slightly elevated temperature during mixing of the reaction components.

**2.** A process as claimed in claim 1, characterized in that a polyol having a molecular weight in the range from 400 to 10,000, in which the diaminodiphenyl urea is only sparingly soluble at room temperature, but readily soluble on heating, is used as component b).

**3.** A process as claimed in claim 1 or 2, characterized in that the diaminodiphenyl urea is present in the form of a suspension in polyol, the ratio by weight of diaminodiphenyl urea to polyol being 1.0:0.5 to 5.0 and preferably 1.0:1.0 to 2.0.

**4.** A process as claimed in any of claims 1 to 3, characterized in that a diaminodiphenyl urea/polyol suspension is used in which 0.05 to 20 $NH_2$ equivalents of the chain extender were reacted with a polyisocyanate in a preliminary step.

**5.** A process as claimed in any of claims 1 to 4, characterized in that 3,3'-diamino-4,4'-dimethyl diphenyl urea and/or 4,4'-diaminodiphenyl urea is/are used as solid chain extender.

**Revendications**
**Revendications pour les Etats contractants suivants : AT, BE, CH, DE, FR, GB, IT, LI, NL, SE**

**1.** Procédé de production d'élastomères de polyuréthanne-urée par réaction en l'absence de solvant, en une ou plusieurs étapes

a) de polyisocyanates,

b) de composés de poids moléculaire élevé porteurs de groupes $NH_2$ ou OH ainsi que, le cas échéant,

c) de composés polyhydroxyliques ou de diamines aromatiques de bas poids moléculaire comme agents d'allongement de chaîne,

caractérisé en ce qu'on fait réagir des polyisocyanates et des composés porteurs de groupes OH ou $NH_2$ ou des NCO-prépolymères préparés à partir de ces composés avec des diaminodiphénylurées finement divisées, se présentant éventuellement sous une forme retardée, de formule générale

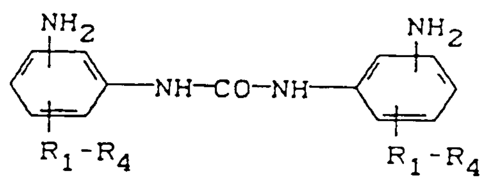

dans laquelle le groupe $NH_2$ se trouve en position méta et/ou en position para par rapport au groupe urée et $R^1$, $R^2$, $R^3$ et $R^4$ - identiques ou différents - et indépendamment les uns des autres - représentent H ou un reste alkyle en $C_1$ à $C_6$, en phase hétérogène à des températures inférieures au point de fusion de la diaminodiphénylurée, la fraction molaire de diaminodiphénylurée dans l'agent d'allongement de chaîne se situant entre 1 et 0,5 et lors du mélange des composants réactionnels, une polyaddition prématurée à la température ambiante ou à température légèrement élevée devant être exclue.

**2.** Procédé suivant la revendication 1, caractérisé en ce qu'on utilise comme composant b) un polyol dans la plage de poids moléculaires de 400 à 10 000, dans lequel la diaminodiphénylurée ne se dissout que difficilement à la température ambiante, mais se dissout bien à chaud.

**3.** Procédé suivant la revendication 1 ou 2, caractérisé en ce que la diaminodiphénylurée se présente sous la forme d'une suspension dans un polyol, le rapport en poids de la diaminodiphénylurée au polyol ayant une valeur de 1,0:0,5 à 5,0, de préférence de 1,0:1,0 à 2,0.

**4.** Procédé suivant l'une des revendications 1 à 3, caractérisé en ce qu'on utilise une suspension de diaminodiphénylurée dans un polyol, dans laquelle 0,05 à 20 équivalents de $NH_2$ de l'agent d'allongement de chaîne ont été amenés à réagir avec un polyisocyanate dans une opération précédente.

**5.** Procédé suivant l'une des revendications 1 à 4, caractérisé en ce qu'on utilise comme agent solide d'allongement de chaîne la 3,3'-diamino-4,4'-diméthyldiphénylurée et/ou la 4,4'-diaminodiphénylurée.

**6.** Mélanges réactionnels en phase hétérogène et ne subissant pas de polyaddition à température ambiante ou à une température légèrement élevée, composés (A) de produits réactionnels porteurs de groupes NCO terminaux dérivés de composés polyhydroxyliques ayant un poids moléculaire de 400 à 10 000 et de polyisocyanates et (B) de diaminodiphénylurées finement divisées se présentant éventuellement sous une forme retardée, de formule générale

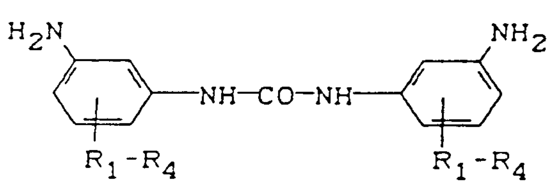

le groupe $NH_2$ se trouvant en position méta et/ou en position para par rapport au groupe urée et $R^1$, $R^2$,

$R^3$ et $R^4$ étant identiques ou différents et représentant, indépendamment les uns des autres, H ou un reste alkyle en $C_1$ à $C_6$.

**Revendications pour l'Etat contractant suivant : ES**

1. Procédé de production d'élastomères de polyuréthanne-urée par réaction en l'absence de solvant, en une ou plusieurs étapes
   a) de polyisocyanates,
   b) de composés de poids moléculaire élevé porteurs de groupes $NH_2$ ou OH ainsi que, le cas échéant,
   c) de composés polyhydroxyliques ou de diamines aromatiques de bas poids moléculaire comme agents d'allongement de chaîne,

   caractérisé en ce qu'on fait réagir des polyisocyanates et des composés porteurs de groupes OH ou $NH_2$ ou des NCO-prépolymères préparés à partir de ces composés avec des diaminodiphénylurées finement divisées, se présentant éventuellement sous une forme retardée, de formule générale

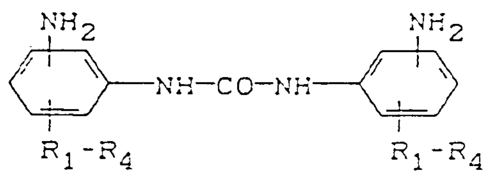

   dans laquelle le groupe $NH_2$ se trouve en position méta et/ou en position para par rapport au groupe urée et $R^1$, $R^2$, $R^3$ et $R^4$ - identiques ou différents - et indépendamment les uns des autres - représentent H ou un reste alkyle en $C_1$ à $C_6$, en phase hétérogène à des températures inférieures au point de fusion de la diaminodiphénylurée, la fraction molaire de diaminodiphénylurée dans l'agent d'allongement de chaîne se situant entre 1 et 0,5 et lors du mélange des composants réactionnels, une polyaddition prématurée à la température ambiante ou à température légèrement élevée devant être exclue.

2. Procédé suivant la revendication 1, caractérisé en ce qu'on utilise comme composant b) un polyol dans la plage de poids moléculaires de 400 à 10 000, dans lequel la diaminodiphénylurée ne se dissout que difficilement à la température ambiante, mais se dissout bien à chaud.

3. Procédé suivant la revendication 1 ou 2, caractérisé en ce que la diaminodiphénylurée se présente sous la forme d'une suspension dans un polyol, le rapport en poids de la diaminodiphénylurée au polyol ayant une valeur de 1,0:0,5 à 5,0, de préférence de 1,0:1,0 à 2,0.

4. Procédé suivant l'une des revendications 1 à 3, caractérisé en ce qu'on utilise une suspension de diaminodiphénylurée dans un polyol, dans laquelle 0,05 à 20 équivalents de $NH_2$ de l'agent d'allongement de chaîne ont été amenés à réagir avec un polyisocyanate dans une opération précédente.

5. Procédé suivant l'une des revendications 1 à 4, caractérisé en ce qu'on utilise comme agent solide d'allongement de chaîne la 3,3'-diamino-4,4'-diméthyldiphénylurée et/ou la 4,4'-diaminodiphénylurée.